# DEMANDE DE BREVET EUROPEEN

(11) **EP 1 112 682 A1**
(43) Date de publication de la demande: **04.07.2001**
(21) Numéro de dépôt: 00403618.2
(22) Date de dépôt: 21.12.2000
(51) Int. Cl.: A01K 1/01

(54) **Dispositif de raclage de déchets comportant un sabot avec cliquet inverseur de sens**

(30) Priorité: 29.12.1999 FR 9916829
(71) Demandeur: Sermap S.A., 25510 Pierrefontaine les Varans (FR)
(72) Inventeur: Chopard, Denis, 25000 Besancon (FR)
(74) Mandataire: Ballot, Paul Denis Jacques

(57) **Abrégé**

Dispositif de raclage (1) destiné à l'élimination de déchets présents à la surface d'un couloir d'exercice d'une étable et constitué par un rail (2) déplaçable et sur lequel rail (2) est monté coulissant un sabot (3) porteur d'un organe de raclage susceptible de se déplacer par l'intermédiaire d'un système à cliquet (4) intégré au sabot (3) et coopérant avec une série d'encoches (A) réalisée sur le rail (2), pour provoquer le déplacement du sabot (3) d'où de l'organe de raclage, caractérisé en ce que le système à cliquet (4) du sabot (3) est constitué par :
- une bascule (5) formée par deux bras à cliquets (6 et 7) disposée sur un axe fixe transversal et horizontal (8), du sabot (3) sur lequel elle s'articule selon deux positions de travail, l'une (I) de marche avant, l'autre (II) de marche arrière pour venir, selon le sens de marche, en prise sous l'effet de son poids inertiel, et de l'action éventuelle d'un ressort R avec une encoche centrale (A) réalisée dans le rail (2) et entraîner conséquemment le sabot (3) d'un pas ;
- des moyens d'inversion de sens de fonctionnement du sabot (3) d'où de l'organe de raclage.
- des racleurs (R1 R2).

## Description

La présente invention concerne d'une manière générale un dispositif de raclage destiné à l'élimination de déchets présents à la surface d'un couloir d'exercice d'une étable et plus particulièrement un système à cliquet permettant son déplacement.

De manière connue, un tel dispositif de raclage est constitué par un rail déplaçable par l'intermédiaire d'un vérin ou d'un entraînement à chaîne, dans une goulotte fixée dans le sol, selon un mouvement rectiligne alternatif transmis par ledit vérin entre une position avant et une position arrière selon une course prédéterminée et sur lequel rail est monté coulissant un sabot porteur d'un organe de raclage, susceptible de se déplacer entre deux positions d'extrémité dudit rail par l'intermédiaire d'un système à cliquet intégré au sabot et coopérant cycliquement et de manière débrayable avec au moins une série d'encoches horizontales d'entraînement réalisées sur le rail selon un axe central longitudinal, pour provoquer le déplacement pas à pas du sabot d'où de l'organe de raclage le long dudit rail, dans un sens ou dans l'autre après inversion.

Dans un tel dispositif de raclage, la partie la plus fragile et la plus complexe est bien le système à cliquet qui met en oeuvre des pièces en mouvement qui sont généralement rappelées dans une position ou dans une autre, selon le sens de marche du dispositif, par l'intermédiaire d'organes sortant du sabot ou rentrant dans le sabot.

On comprend aisément que dans un tel milieu, la présence de telles pièces laissent la liberté aux éléments extérieurs d'entrer dans le sabot ou se trouve le système à cliquet qui est soumis à rude épreuve lorsqu'il opère en présence de lisier ou fumier provoquant des difficultés ou des blocages d'inversion.

Le but de la présente invention est de remédier à ces différents inconvénients et également d'obtenir un système à cliquet entièrement étanche dont les éléments constitutifs permettant l'avance dans un sens ou dans un autre, ainsi que des moyens d'inversion de sens, seraient entièrement intégrés au sabot.

A cet effet, l'invention concerne un dispositif de raclage destiné à l'élimination de déchets présents à la surface d'un couloir d'exercice d'une étable et constitué par un rail déplaçable par l'intermédiaire d'un vérin ou d'une chaîne dans une goulotte fixée au sol, selon un mouvement rectiligne alternatif transmis par ledit vérin entre une position avant et une position arrière selon une course prédéterminée et sur lequel rail est monté coulissant un sabot porteur d'un organe de raclage susceptible de se déplacer entre deux positions d'extrémité dudit rail par l'intermédiaire d'un système à cliquet intégré au sabot et coopérant cycliquement et de manière débrayable avec au moins une série d'encoches horizontales d'entraînement réalisée sur le rail, selon un axe central longitudinal pour provoquer le déplacement pas à pas du sabot d'où de l'organe de raclage le long dudit rail dans un sens ou dans l'autre après inversion, caractérisé en ce que le système à cliquet du sabot est constitué par :
- une bascule formée par deux bras à cliquets sensiblement identiques s'étendant dans le même plan vertical dans deux directions, sensiblement opposées, de part et d'autre d'un axe fixe transversal et horizontal, du sabot sur lequel s'articule ladite bascule selon deux positions de travail, l'une de marche avant, l'autre de marche arrière, les extrémités libres des bras étant de forme telle à permettre à l'une ou à l'autre, selon le sens de marche, d'une part de venir en prise sous l'effet de son poids inertiel, éventuellement assisté par un ressort, avec une encoche centrale réalisée dans le rail et entraîner conséquemment le sabot d'un pas et d'autre part de se dégager de cette même encoche par soulèvement par la seule action du passage du rail rappelé dans l'autre sens par le vérin, avant qu'il n'avance d'un nouveau pas, par coopération avec une encoche successive centrale ;
- des moyens d'inversion de sens de fonctionnement du sabot d'où de l'organe de raclage, une fois en bout de course, par action en pivotement sur la bascule pour le faire passer d'une position de travail à une autre.

Selon l'un des buts également recherchés par l'invention et rendu possible par celle-ci, les axes de poussée sur le système à cliquet sont ramenés le plus près possible de l'axe du rail, de manière à minimiser le couple de soulèvement, ayant également pour effet de provoquer des usures importantes dans les installations très chargées.

La présente invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée en référence aux dessins annexés sur lesquels :
La figure 1 est une vue en coupe longitudinale d'un sabot porteur d'un organe de raclage comportant un système à cliquet selon l'invention, pour une position de fin de course de raclage du sabot, immédiatement avant inversion de sens du dispositif.
La figure 2 est une vue en perspective selon la figure 1.
La figure 3 est une vue d'un système à cliquet selon les figures 1 et 2 montrant l'entrée en action des moyens d'inversion de sens.
La figure 4 montre l'action du système d'inversion sur la bascule porteuse des bras à cliquet et initialisant le recul du sabot.
La figure 5 représente le système à cliquet au cours d'une translation à vide du rail, avant une reprise de poussée sur le sabot.
La figure 6 est une vue du système à cliquet au cours d'une nouvelle poussée du rail sur le sabot.
La figure 7 est une vue en perspective du système à cliquet selon la figure 6.
Les figures 8 et 9 représentent respectivement en vue latérale et de dessus, l'extrémité d'un rail avec lequel coopère le système à cliquet de l'invention.

Le dispositif de raclage 1 globalement désigné sur les figures est constitué par un rail 2 déplaçable par l'intermédiaire d'un vérin ou d'une chaîne (non représentée) dans une goulotte fixée au sol, selon un mouvement rectiligne alternatif transmis par ledit vérin entre une position avant (AV) et une position arrière (AR) selon une course prédéterminée et sur lequel rail 2 est monté coulissant un sabot 3 porteur d'un organe de raclage (non représenté) susceptible de se déplacer entre deux positions d'extrémité dudit rail 2 par l'intermédiaire d'un système à cliquet 4 intégré au sabot 3 et coopérant cycliquement et de manière débrayable avec au moins une série d'encoches horizontales d'entraînement A réalisées sur le rail 2 selon un axe central longitudinal pour provoquer le déplacement pas à pas du sabot 3 d'où de l'organe de raclage le long dudit rail 2 dans un sens F1 ou dans l'autre F2 après inversion.

Le système à cliquet 4 du sabot 3 est constitué par :
- une bascule 5 formée par deux bras à cliquets 6 et 7 identiques s'étendant dans le même plan vertical dans deux directions opposées, de part et d'autre d'un axe fixe transversal et horizontal 8, du sabot 3 sur lequel s'articule ladite bascule 5 selon deux positions de travail, l'une I de marche avant, l'autre II de marche arrière, les extrémités libres 6A, 7A des bras 6, 7 étant de forme telle à permettre à l'une ou à l'autre, selon le sens de marche, d'une part de venir en prise sous l'effet de son poids inertiel, avec une encoche centrale A réalisée dans le rail 2 et entraîner conséquemment le sabot 3 d'un pas et d'autre part de se dégager de cette même encoche A par soulèvement par la seule action du passage du rail 2 rappelé dans l'autre sens par le vérin (non représenté), avant qu'il n'avance d'un nouveau pas, par coopération avec une encoche successive centrale A' ;
- des moyens d'inversion 8 de sens de fonctionnement du sabot 3 d'où de l'organe de raclage, une fois en bout de course, par action en pivotement sur la bascule 5 pour le faire passer d'une position de travail I à une autre II.

Eventuellement la bascule 5 est aidée par l'action du ressort R qui est guidé et maintenu par un levier 12, articulé sur un axe inférieur horizontal 13 de la bascule et sur la partie supérieure du sabot 3 dans une cloche évasée.

Selon une autre caractéristique de l'invention, les moyens d'inversion 8 du sens de fonctionnement du sabot 3 sont constitués par deux bras inverseurs 9 et 10 formant des masselottes sensiblement identiques, disposées de part et d'autre de la bascule 5 et s'étendant dans des directions opposées selon deux plans verticaux parallèles au plan vertical de ladite bascule 5, par l'intermédiaire d'un axe transversal d'articulation excentrée 11, traversant une zone inférieure centrale de la bascule 5 et sur lequel s'articulent librement les deux bras inverseurs 9 et 10 de manière à ce que, pour un sens de marche donnée F1 ou F2 du sabot 3, lorsque l'extrémité libre 9A ou 10A du bras inverseur de tête 9 ou 10 de forme appropriée, vient en prise sous l'effet de son seul poids inertiel avec une encoche latérale B ou B' située à gauche ou à droite des deux extrémités du rail 2 selon le sens de marche F1 ou F2, il se produit une poussée de sens contraire sur l'excentrique de la bascule 5 provoquant son basculement automatique vers son autre position de travail, et conséquemment l'inversion de marche du sabot 3 sous l'effet du déplacement rectiligne alternatif invariable communiqué au rail 2 par le vérin (non représenté).

En fait, les extrémités libres 6A, 7A ou 9A, 10A respectivement des bras à cliquet 6, 7 de la bascule 5 ou des bras inverseurs associés 9, 10 présentent des becquets formés d'une part par des rampes 6Aa, 7Aa ou 9Aa, 10Aa leur permettant dans un sens donné, de sortir aisément d'une encoche A ou B avec laquelle il vient de coopérer en poussée dans l'autre sens et d'autre part par des épaulements 6Ab, 7Ab ou 9Ab, 10Ab opposés aux dites rampes leur permettant d'exercer cette poussée sur le rail 2 s'il s'agit de la bascule 5 à cliquet 6, 7 ou sur cette bascule même, s'il s'agit des bras inverseurs 9, 10.

Selon une autre caractéristique de l'invention, la bascule 5 comporte un moyen d'actionnement manuel de secours, d'immobilisation du sabot ou d'inversion dans un sens F1 ou dans l'autre F2, qui est constitué par un axe d'articulation 13 excentré par rapport à l'axe d'articulation 8 de la bascule 5 et diamétralement opposé à l'axe excentré 11 des bras inverseurs 9, 10, ledit axe d'articulation 13 du levier de guidage 12 du ressort R est accessible de l'extérieur par une lumière courbe 14 réalisée sur l'une des parois verticales du sabot 3 et dont le rayon de courbure est égal à l'entraxe existant entre l'axe d'articulation 11 de la bascule 5 et celui 13 dudit levier 12.

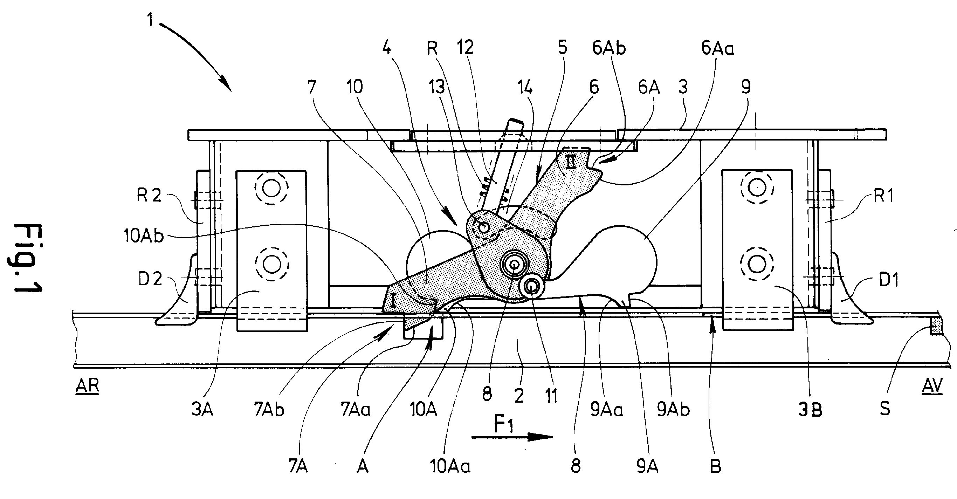

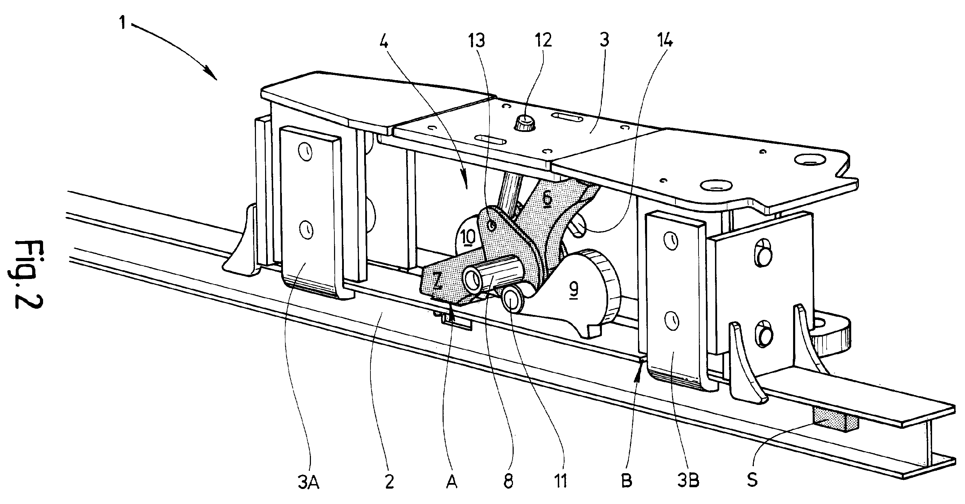

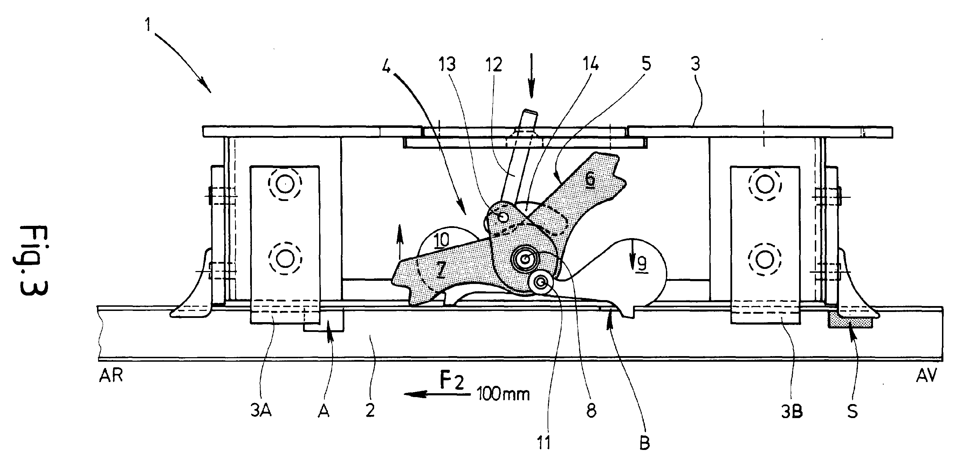

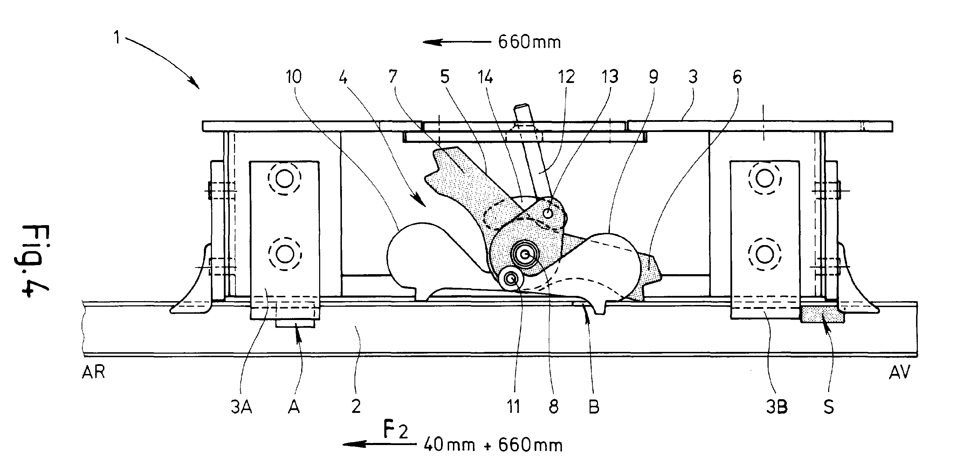

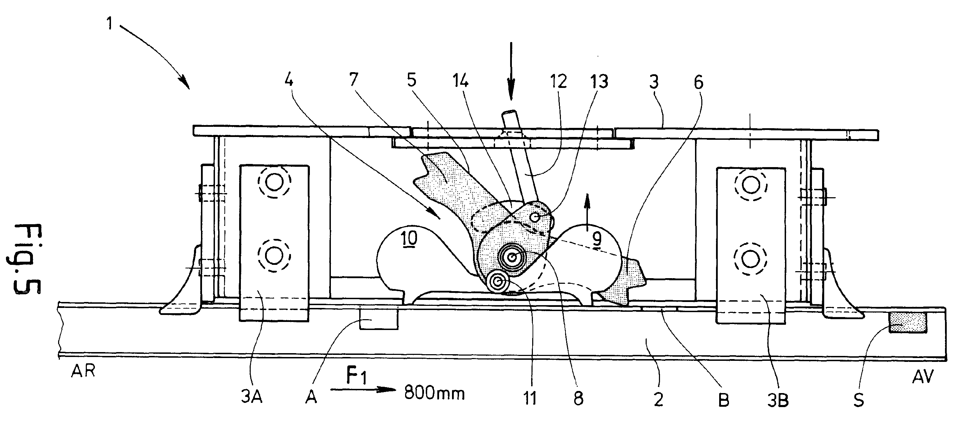

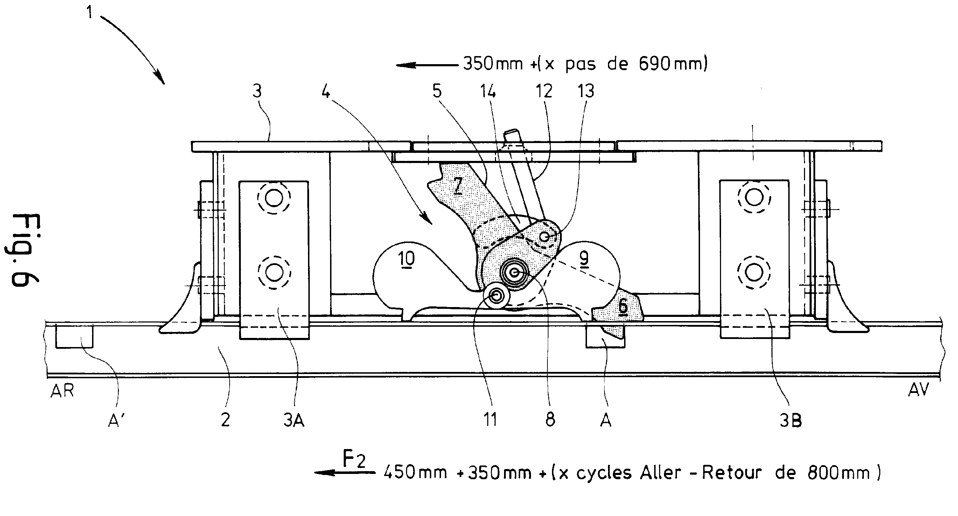

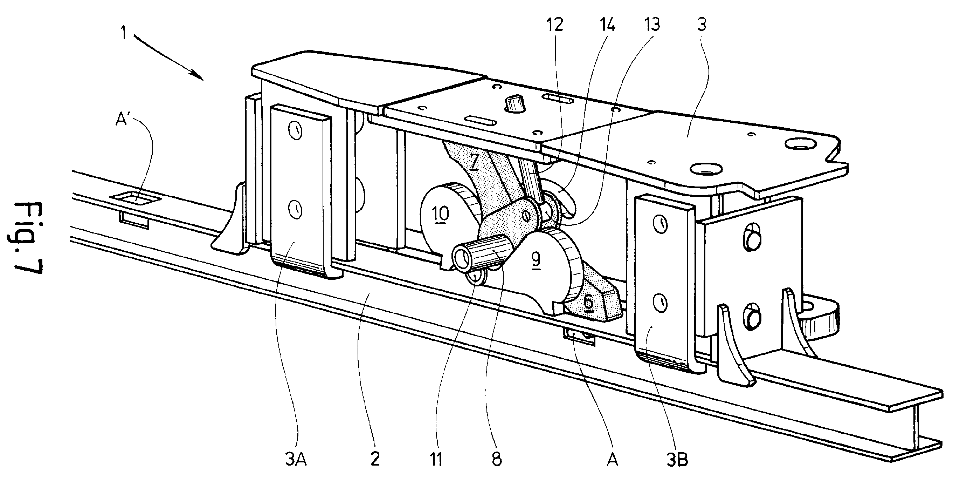

L'inversion de sens d'un tel dispositif de raclage, tel qu'il vient d'être décrit s'effectue par l'intermédiaire du système à cliquet 4 de la manière suivante :
- selon les figures 1 et 2, le bras à cliquet 7 de la bascule 5 se trouvant dans l'encoche A, dans une position de travail I, après une dernière poussée du rail 2 dans le sens F1 vers une position avant, le sabot 3 se trouve alors en fin de course de raclage.
- selon la figure 3, le rail 2 recule de 100 mm dans le sens F2 c'est à dire vers l'arrière, et le bras à cliquet 7 se dégage de la lumière A et le becquet 9 A du bras inverseur 9 tombe dans l'encoche d'inversion B. Par sécurité une butée S, par exemple de 20 X 20 et de longueur 50 est disposée à 225 mm de l'encoche B et est susceptible de venir en contact avec un élément de coulissement 3A du sabot 3.
- selon la figure 4, le rail 2 recule de 40 mm vers l'arrière, la bascule 5 s'inverse et le bras à cliquet 6 vient en contact du rail 2. Le sabot 3 ne recule pas pour l'instant. La butée S vient en appui sur la partie 3A du sabot 3.
- toujours selon la figure 4, le rail 2 continue à reculer d'une valeur de 800 - 100 - 40 = 660 mm en entraînant le sabot 2 vers l'arrière d'une valeur correspondante, par l'intermédiaire de la butée S poussant sur la partie 3A du sabot 3. La course du vérin de 800 mm est donnée à titre d'exemple, mais peut être différente.
- selon la figure 5, le rail 2 est rappelé vers l'avant, selon le mouvement alternatif du vérin selon une valeur de 800 mm. Ceci provoque le désengagement du becquet 9A du bras inverseur 9 de l'encoche B et vient reposer sur la partie supérieure du rail 2 dans une position inactive.
- selon les figures 6 et 7 le rail 2 recule de 450 mm et le becquet 6A du bras à cliquet 6 de la bascule 5 s'enclenche dans l'encoche A. Le sabot 3 parcourt alors le reste de la course du vérin soit 800 - 450 = 350 mm vers l'arrière.
- selon les figures 6 et 7 le sabot continue à reculer ensuite suivant le cycle normal, soit par pas de 690 mm.
- lorsque le sabot 3 est arrivé en fin de course vers l'arrière, cette inversion s'effectue de la même manière sauf que l'inversion de sens s'effectuera par l'intermédiaire de l'encoche B' située de l'autre coté du rail 2 et agira cette fois sur le bras inverseur 10 pour provoquer le basculement de la bascule 5 dans l'autre sens.

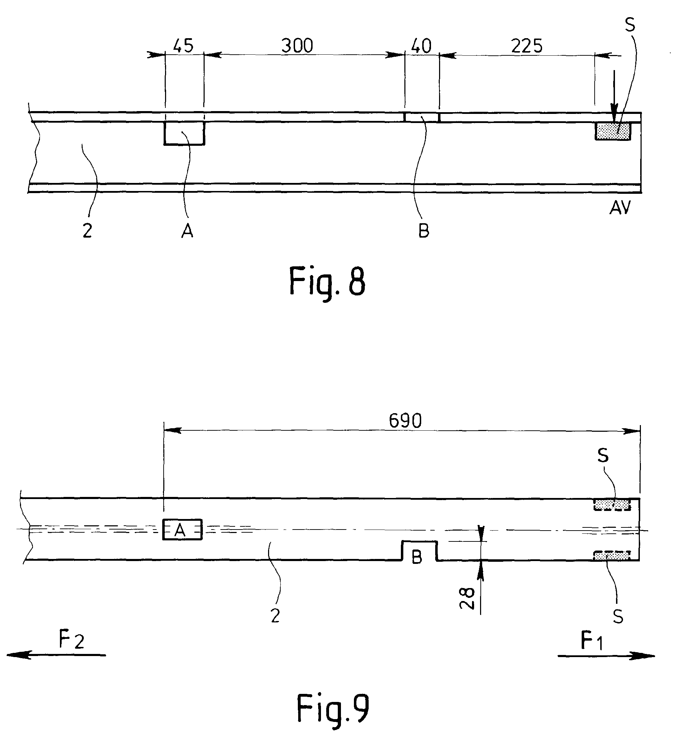

A titre indicatif, les figures 8 et 9 montrent la largeur et le positionnement des encoches A et B. Comme on peut le remarquer l'encoche A d'entraînement a une longueur de 45 mm alors que l'encoche B d'inversion a une longueur de 40 mm ; la distance les séparant étant de 300 mm alors que la distance séparant l'extrémité de l'encoche A avec l'extrémité du rail est de 690 mm alors que la distance séparant l'encoche B de la butée S est de 225 mm. Bien entendu, ces valeurs peuvent être changées en fonction des longueurs de course à obtenir.

En résumé, les avantages procurés par l'invention sont les suivants :
- aucune pièce servant d'inversion au cliquet ne sort ni ne rentre, ni à l'avant ni à l'arrière du sabot 3.
- aucune pièce servant d'inversion au cliquet n'est solidaire du rail et rentrant dans le sabot 3, le système d'inversion de l'ensemble cliquet 4 opère ses actions tout en restant à l'intérieur du sabot 3.

De ce fait, l'ensemble cliquet 4 reste quasiment propre aux moyens de racleurs du rail R1 et R2 à l'avant et à l'arrière du sabot 3 et permettant le raclage du lisier au fumier sur le rail 2 soit dans un sens F1 ou F2. Les racleurs de rail R1 et R2 maintenus sur le sabot 3 et coulissant verticalement reposent de leur poids inertiel sur le rail 2. Les racleurs R1 et R2 sont munis de décrotteurs latéraux D1 et D2, permettant le dégagement des matières se trouvant sur les bords du rail 2 pour faciliter le passage des griffes de maintien 3A, 3B du sabot 3 sur le rail 2.

## Revendications

1. Dispositif de raclage (1) destiné à l'élimination de déchets présents à la surface d'un couloir d'exercice d'une étable et constitué par un rail (2) déplaçable par l'intermédiaire d'un vérin ou d'une chaîne (non représentés) dans une goulotte fixée dans le sol, en béton par exemple, selon un mouvement rectiligne alternatif transmis par ledit vérin entre une position avant (AV) et une position arrière (AR) selon une course prédéterminée et sur lequel rail (2) est monté coulissant un sabot (3) porteur d'un organe de raclage susceptible de se déplacer entre deux positions d'extrémité dudit rail par l'intermédiaire d'un système à cliquet (4) intégré au sabot (3) et coopérant cycliquement et de manière débrayable avec au moins une série d'encoches horizontales d'entraînement (A) réalisée sur le rail (2), selon un axe central longitudinal pour provoquer le déplacement pas à pas du sabot (3) d'où de l'organe de raclage le long dudit rail (2) dans un sens (F1) ou dans l'autre (F2) après inversion, caractérisé en ce que le système à cliquet (4) du sabot (3) est constitué par :
- une bascule (5) formée par deux bras à cliquets (6 et 7) sensiblement identiques s'étendant dans le même plan vertical dans deux directions, sensiblement opposées, de part et d'autre d'un axe fixe transversal et horizontal (8), du sabot (3) sur lequel s'articule ladite bascule (5) selon deux positions de travail, l'une (I) de marche avant, l'autre (II) de marche arrière, les extrémités libres (6A, 7A) des bras (6, 7) étant de forme telle à permettre à l'une ou à l'autre, selon le sens de marche, d'une part de venir en prise sous l'effet de son poids inertiel, éventuellement assisté par un ressort (R), avec une encoche centrale (A) réalisée dans le rail (2) et entraîner conséquemment le sabot (3) d'un pas et d'autre part de se dégager de cette même encoche (A) par soulèvement par la seule action du passage du rail (2) rappelé dans l'autre sens par le vérin (non représenté), avant qu'il n'avance d'un nouveau pas, par coopération avec une encoche successive centrale (A') ;
- des moyens d'inversion (8) de sens de fonctionnement du sabot (3) d'où de l'organe de raclage, une fois en bout de course, par action en pivotement sur la bascule (5) pour le faire passer d'une position de travail (I) à une autre (II).

2. Dispositif de raclage (1) selon la revendication 1, caractérisé en ce que les moyens d'inversion (8) du sens de fonctionnement du sabot (3) sont constitués par deux bras inverseurs (9 et 10) formant des masselottes sensiblement identiques, disposés de part et d'autre de la bascule (5) et s'étendant dans des directions opposées selon deux plans verticaux parallèles au plan vertical de ladite bascule (5), par l'intermédiaire d'un axe transversal d'articulation excentré (11), traversant une zone inférieure centrale de la bascule (5) et sur lequel s'articulent librement les deux bras inverseurs (9 et 10) de manière à ce que, pour un sens de marche donnée (F1 ou F2) du sabot 3, lorsque l'extrémité libre 9A ou 10A du bras inverseur de tête (9 ou 10) de forme appropriée, vient en prise sous l'effet de son seul poids inertiel avec une encoche latérale (B ou B') située à gauche ou à droite des deux extrémités du rail (2) selon le sens de marche (F1 ou F2) il se produit une poussée de sens contraire sur l'excentrique de la bascule (5) provoquant son basculement automatique vers son autre position de travail, d'où l'inversion de marche du sabot (3) sous l'effet du déplacement rectiligne alternatif invariable communiqué au rail (2) par le vérin (non représenté).

3. Dispositif de raclage (1) selon les revendications 1 ou 2, caractérisé en ce que les extrémités libres (6A, 7A ou 9A, 10A) respectivement des bras à cliquet (6, 7) de la bascule (5) ou des bras inverseurs associés (9, 10) présentent des becquets formés d'une part par des rampes (6Aa, 7Aa ou 9Aa, 10Aa) dans un sens donné de sortir aisément d'une encoche (A ou B) avec laquelle il vient de coopérer en poussée dans l'autre sens et d'autre part par des épaulements (6Ab, 7Ab ou 9Ab, 10Ab) opposés aux dites rampes leur permettant d'exercer cette poussée sur le rail (2) s'il s'agit de la bascule (5) à cliquet (6, 7) ou sur cette bascule même, s'il s'agit des bras inverseurs (9, 10).

4. Dispositif de raclage (1) selon l'une des revendications 1 à 3, caractérisé en ce que la bascule (5) comporte des moyens d'actionnement manuels de secours, d'immobilisation du sabot ou d'inversion dans un sens (F1) ou dans l'autre (F2), qui sont constitués par un axe d'articulation 13 excentré par rapport à l'axe d'articulation 8 de la bascule 5 et diamétralement opposé à l'axe excentré 11 des bras inverseurs 9, 10, ledit axe d'articulation 13 du levier de guidage 12 du ressort R est accessible de l'extérieur par une lumière courbe 14 réalisée sur l'une des parois verticales du sabot 3 et dont le rayon de courbure est égal à l'entraxe existant entre l'axe d'articulation 11 de la bascule 5 et celui 13 dudit levier 12.
